# EUROPEAN PATENT APPLICATION

(11) **EP 1 684 227 A1**
(43) Date of publication of application: **26.07.2006**
(21) Application number: 05250260.6
(22) Date of filing: 19.01.2005
(51) Int. Cl.: G06Q 10/00

(54) **Method and apparatus for deploying and licensing wireless communication device computer software infrastructure to manufacturers**

(71) Applicant: Research In Motion Limited, Waterloo, Ontario N2L 3W8 (CA)
(72) Inventor: Payne, Susan, Toronto, Ontario, M4R 2A6 (CA); Johnson, Kerry W., Kanata, Ontario K2W 1B1 (CA); Kahandaliyanage, Shawn, Kichener, Ontario N2H 6R8 (CA)
(74) Representative: Roberts, Gwilym Vaughan

(57) **Abstract**

Feature-provisioning computer software infrastructure for wireless communication devices is conveniently deployed and licensed to device manufacturers and the like. The exemplary system provides a simple integrated solution that incorporates licensing, revenue sharing and provisioning.

## Description

### BACKGROUND

### 1. Technical Field

This invention generally relates to method and apparatus for deploying and/or licensing wireless communication device computer software infrastructure to manufacturers and/or distributors and/or sellers or the like of wireless communication devices.

### 2. Related Art

Wireless communication devices are now well known and commonly used. Such devices are manufactured or distributed or sold by numerous entities some of which provision their particular devices with unique features. Various service providers (e.g., wireless carriers or communication data relay service providers or the like) often also provide end user devices having various suites of features. It is even conceivable that a sophisticated end user or a large enterprise utilizing a number of such devices might improvise their own unique suite of device features.

It is also known that sometimes two or more parties (e.g., wireless carrier services and device manufacturers) will produce and bring an end user device product to market with particular suites of available features. Obviously there have been, in effect, joint developments with licenses being granted in one or both directions so as to produce a product whose ultimate revenue stream from end users will benefit all of those involved in the joint development project.

Some examples of prior arrangements for provisioning wireless devices with features that provide revenue sharing between two or more parties involved with the feature development, provisioning and/or service are noted below:
US 2002/0,198,847 A1 - Fahraeus
US 2004/203,683 A1 ― Engstrom et al.
US 2003/0,185,240 A1 ― Vuang
US 2004/0,054,786 - Kjellberg et al.
US 6,754,833 B 1 - Black et al.
US 6,795,700 B 1 - Karaoguz et al.

However, it is not believed that the prior art has yet provided a simple, integrated solution that incorporates licensing, revenue sharing and provisioning so as to permit a device manufacturer to easily license one or more features and include them in an end user device.

### BRIEF SUMMARY

We have now recognized that it is possible to provide a simple, integrated solution that incorporates licensing, revenue sharing and provisioning (or any subcombination thereof) so that a device manufacturer may easily become a licensee of software features provided by willing licensors.

The exemplary solution to this problem provides a software licensing program targeted at hardware manufacturers, distributors, sellers, etc. It is distribution model independent. That is, although possible, it is not necessary for the jointly developed end-user feature-provisioning software to be vended directly to an end user. For example, such direct after-market vending to end users may be achieved as described in a related concurrently filed copending and commonly assigned application 10/_,_ entitled Method and Apparatus for After-Market Vending of Feature-Provisioning Software to Third Party Mobile Wireless Communication Devices, the entire content of which is hereby incorporated by reference.

Using the exemplary embodiment described below, wireless communication device feature-provisioning computer software (i.e., compiled computer program logic code) may be licensed, developed and utilized so as to effectively connect that device to the available infrastructure of a communication data relay service provider or the like. Furthermore, such licensing of feature-provisioning software from a third party (e.g., the communication data relay service provider), also permits joint revenue sharing with the licensee (e.g., the manufacturer of the device and/or a wireless service provider). In this manner, a communication data relay service provider that normally equips its own end user handsets with a suite of functions (e.g., email, wireless calendar, IT management, GAL lookup, MDS, BWC, etc.) can also now conveniently enable mobile device manufacturers to equip its own handsets with similar functionality - using the trusted, already deployed, data relay service provider's software under license with revenue sharing coming back to the licensor in a convenient way as user devices are actually activated in the field.

This process need not be an automated process where a licensee can simply obtain the compiled code. The licensing process may include a license, development and a maintenance and support contact. The licensed compiled code can be sent electronically over a secure connection (ftp/PGP) by the licensor's development team to the licensee development team. Then there can be a joint integration workshop where both teams work together to integrate the compiled code onto a target handset.

The licensor need not guarantee a royalty payment through automated software features in the licensed software itself. A base license fee may typically be agreed upon up front by the licensee and paid to licensor (whether on a per unit shipped with the licensed software or a flat fee). To insure ongoing revenue sharing, the wireless gateway (relay) may log how many licensee devices are active on the licensor's network (assuming that the licensor is the data relay service provider), and from there revenue sharing, if any, can be allocated (e.g., a share of the licensor's fees from a carrier based on licensed software usage maby be allocated back to the licensee/manufacturer).

This invention may be embodied, at least in part, in hardware, software or a combination of hardware and software. The invention also provides a method for deploying and licensing wireless communication device computer software infrastructure to manufacturers et al of such devices. The exemplary embodiment is realized, at least in part, by executable computer program code which may be embodied in physical program memory media.

### BRIEF DESCRIPTION OF THE DRAWINGS

These and other objects and advantages of this invention will be better understood and appreciated in conjunction with the following detailed description of exemplary embodiments taken together with the accompanying drawings, of which:
FIG. **1** is an overall system wide schematic view of an exemplary wireless email communication system incorporating a mobile wireless communication device that may be pre-provisioned with one or more features or suites of features that can be activated upon purchase causing a monetary royalty to effectively be paid to the original licensor of the feature-provisioning software (and no doubt to the device manufacturer as well);
FIG. **2** is an abbreviated schematic diagram of hardware included within an exemplary mobile wireless communication device as shown in FIG. **1;**
FIG. **3** is an exemplary abbreviated schematic diagram of typical platform hardware that may be employed in the system of FIG. **1;**
FIG. **4** is an abbreviated schematic diagram of various computer program software layers in a pre-provisioned end user device;
FIG. **5** is an exemplary abbreviated schematic flowchart of computer software (i.e., program logic) that may be employed in an exemplary embodiment to deploy licensed compiled data relay service provider application/communication servicing software with disclosed APIs to a wireless communication device manufacturer and, if desired, to provide a future royalty stream as end user devices are activated and/or utilized;
FIG. **6** is an exemplary abbreviated schematic flowchart of optional computer software (i.e., program logic) that, if desired, may be utilized in the system of FIG. **1** as a part of an activation software in the licensed compiled function-provisioning software;
FIG. **7** is an exemplary abbreviated schematic flowchart of computer software (i.e., program logic) that may be utilized by a data relay service provider to invoice a licensee for additional royalty payments based upon detected usage of a licensed feature;
FIG. **8** is an exemplary abbreviated schematic flow chart illustrating a presently preferred method for a licensee to share in a licensor's service fees derived from a carrier service fee paid as a result of user activation of a licensed software feature; and
FIGS. **9** and **10** are schematic depictions of device software architecture for "connect" and "built-in" configurations of licensed software.

### DETAILED DESCRIPTION OF EXEMPLARY EMBODIMENTS

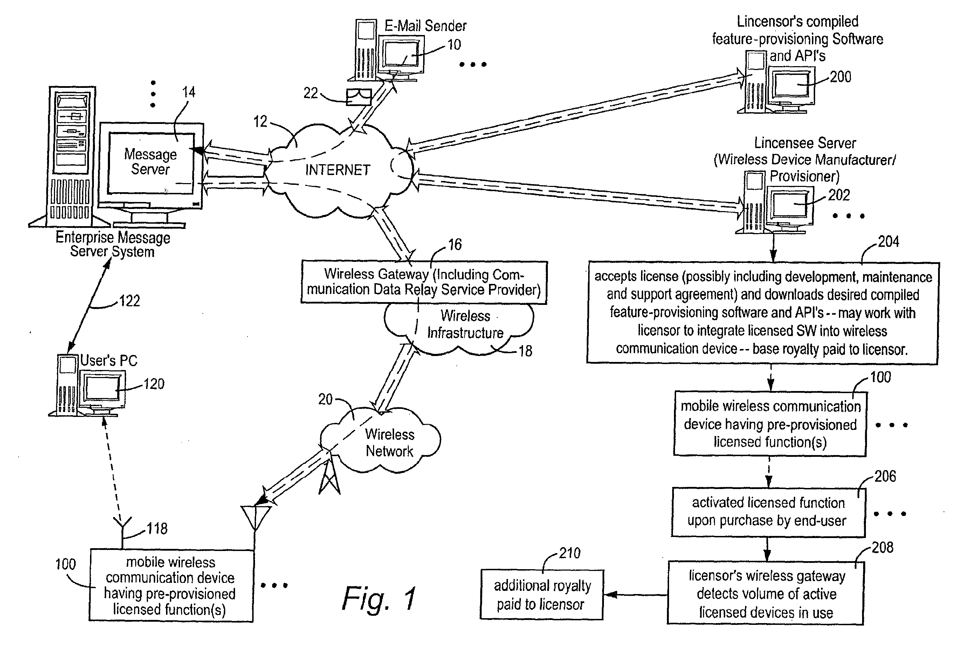

FIG. **1** is an overview of an exemplary communication system in which a wireless communication device **100** having pre-provisioned licensed function(s) may be used. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** an enterprise (e.g., corporate client-owned) message server system **14,** a wireless gateway **16** (e.g., provided by a communication data relay service provider), wireless infrastructure **18,** wireless network(s) **20** and mobile communication device **100.**

An email sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG. **1** may instead be connected to a wide area network (WAN) other than the Internet, although email transfers are commonly accomplished through Internet-connected arrangements as shown in FIG. **1.**

The enterprise message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1,** as they do not directly play a role in the invention described below. Message servers such as server 14 typically extend beyond just email sending and receiving; they also include dynamic database storage engines that have predefined database formats for data like calendars, to-do lists, task lists, email and documentation.

The wireless gateway **16** (typically including a communication data relay service provider) and infrastructure **18** provide a link between the Internet **12** and one or more wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1,** a composed email message **22** is sent by an email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer **120** which belongs to the user of a mobile device **100** are redirected (i.e., "pushed") from the message server **14** to the mobile device **100** as they are received.

Regardless of the specific mechanism controlling forwarding of messages to mobile device **100,** the message **22,** or possibly a translated or reformatted version thereof, is sent to wireless gateway **16.** The wireless infrastructure **18** includes a series of connections to wireless network(s) **20.** These connections could be Integrated Services digital Network (ISDN), Frame Relay or T1 connections using the TCP/IP protocol used throughout the Internet. As used herein, the term "wireless network" is intended to include any or all of three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple-Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

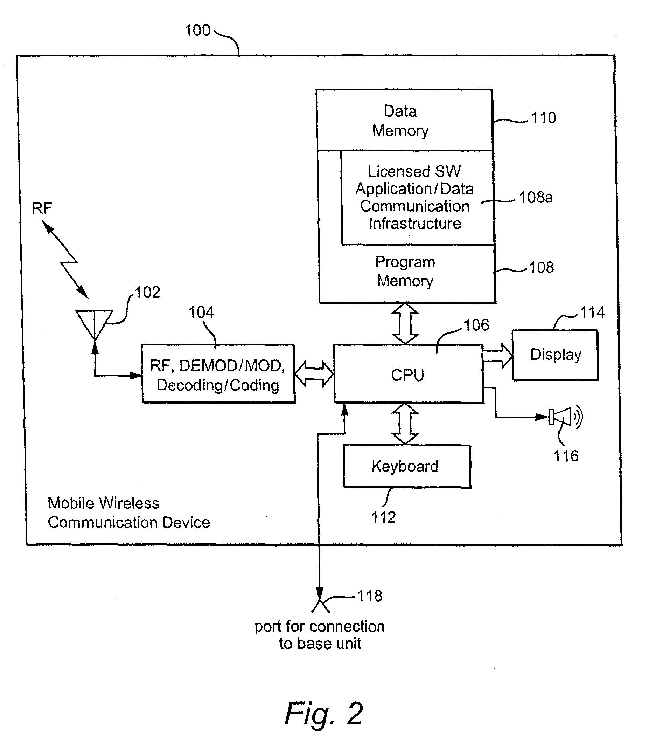

As depicted in FIG. **2,** mobile communication device **100** includes a suitable RF antenna 102 for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110).** CPU **106** also communicates with a conventional keyboard **112,** display **114** (e.g., an LCD) and audio transducer or speaker **116.** Suitable computer program executable code is stored in portions of program memory **108** including licensed application and/or data communication infrastructure software (i.e., executable program logic) at **108a** to constitute the modus operandi of wireless device **100.**

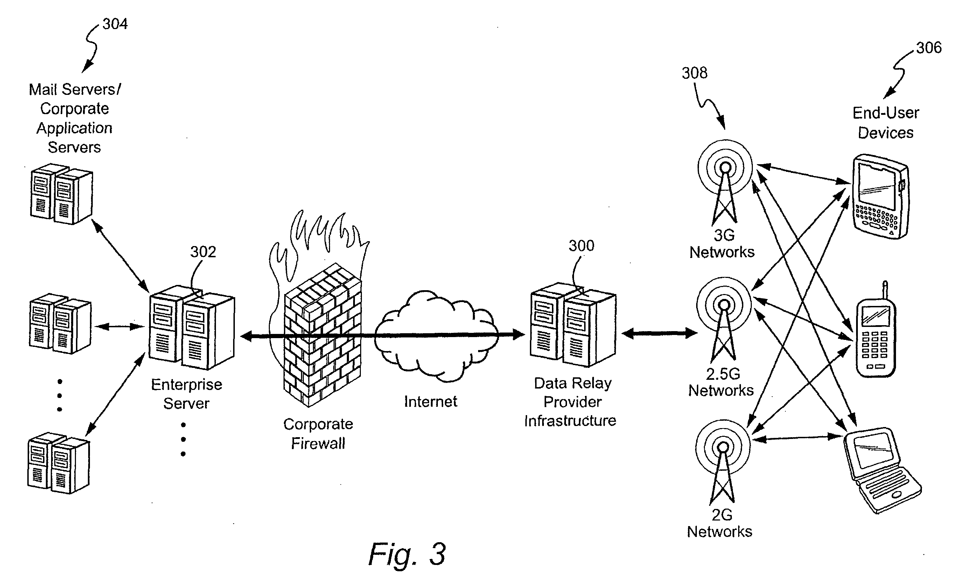

As depicted in FIG. **3,** the system of FIG. **1** may involve end user device features that are effectively provided by a data relay provider infrastructure **300.** Cooperating software in the enterprise servers **302** and/or mail servers/corporate application servers **304** and/or in the end user devices **306** cooperate via various communications media (e.g., the Internet, corporate firewall, various wireless networks **308,** etc.) to provide certain graphical user interfaces for various kinds of functionalities (e.g., email, calendar, management, etc.).

As depicted in FIG. **1** and as will be appreciated by those in the art, many mobile wireless communication devices **100** include a port **118** for connection to the user's PC **120.** Typically, the user's PC **120** is also connected via network **122** with the message server system **14** of an enterprise (e.g., the user's employer). Of course, there will be many enterprise message servers **14** each having associated with it many mobile wireless communication devices **100,** each of which typically may also have a user's PC base unit **120** associated with it in a real world system.

In a system like that of FIG. **1,** a licensor's website **200** may includes compiled feature-provisioning software and corresponding application program interfaces (APIs). This licensor's website **200** is accessible via the Internet **12** (e.g., a service ptp/pgp connection) to a licensee's server **202.** This provides a convenient secure mechanism for a licensee (wireless device manufacturer or distributor or seller or the like provisioning user devices **100** with features) to receive the compiled licensed software and the associated API. Such a licensee may conventionally interact with the licensor's website **200** to download desired compiled feature-provisioning software with its corresponding API as depicted at **204** in FIG. **1.** As will be appreciated, the downloading step typically will be preceded by a suitable negotiated license agreement (which may include development, maintenance and support contract provisions) while such negotiation can be conducted electronically by semi- or fully automated processes, it need not be. Typically there will also be a joint integration workshop between both licensor and licensee teams to integrate the licensed compiled code into a target handset.

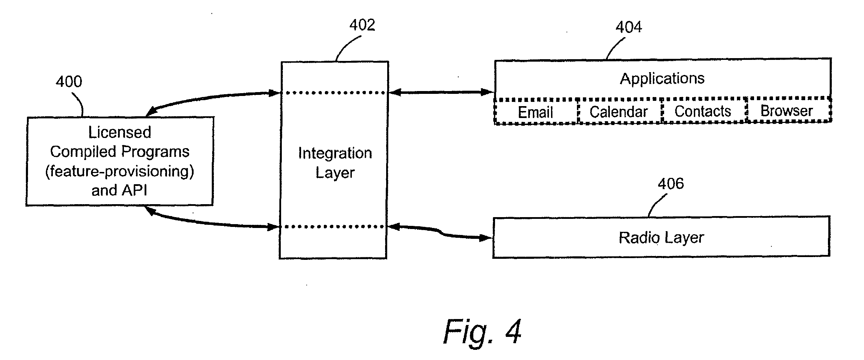

As depicted in FIG. **4,** the licensed compiled feature-provisioning programs **400** may be utilized via its also disclosed API so that the manufacturer (or other licensee) can now design an integration layer **402** of software interfacing the licensed feature-provisioning already compiled software with other manufacturer-designed application software **404** and/or radio layer software **406.**

Of course, as will be appreciated, if the manufacturer desires and if the licensed compiled feature-provisioning program permits it, then the application software **404** and/or radio layer software **406** may actually be directly provided by the licensed compiled feature-provisioning software (e.g., possibly without an integration layer **402).** In this latter situation, the pre-provisioned wireless communication device would, in effect, duplicate the suite of applications and features associated with the licensed compiled feature-provisioning programs **400** directly. That is, the device might appear to be the same in look and feel as a device that is otherwise manufactured and provided by the licensor itself.

In any event, using licensed and downloaded compiled feature-provisioning software, the manufacturer can utilize that software wholly or partially as desired to provide a pre-provisioned wireless communication device with licensed functionality as depicted at **100** in FIG. **1.** After purchase by an end user, that device may be activated as depicted at **206** by the end user (or the seller, etc.). When the licensed functionality of the device **100** is utilized, the volume of such utilization may be detected (e.g., by the licensor wireless gateway data relay service provider) at **208** to document the need for additional royalty payments to the licensor as depicted at **210.**

Alternatively, if desired, the licensed software (or other software integrated therewith) may itself include program logic requirements that insures a further royalty will be paid to the licensor (e.g., by the end user directly such as by credit or debit card transactions via the Internet or by the licensee effecting payment to the licensor upon receiving suitable notification from the end user activation process, etc.). Of course there may also be no additional royalty due under the negotiated license agreement.

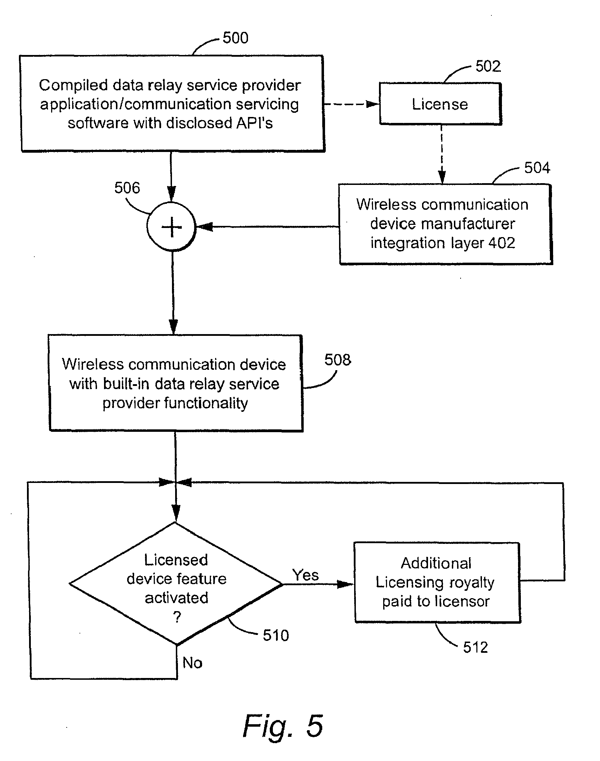

Any exemplary system is further schematically illustrated at FIG. 5. For example, at **500** a licensor's (e.g., a data relay service provider) compiled application/communications servicing software is created, each with an accompanying respectively associated application program interface (API). Once an appropriate license 502 is in place with a wireless communication device manufacturer or the like, then, using the disclosed API, the manufacturer can create an integration layer **402** as depicted at **504** in FIG. 5. These two different software layers and perhaps other software as well can then be integrated and linked or loaded as depicted at **506** to provide a pre-provisioned wireless communication device as depicted at **508.** For example, the device may have built in data relay service provider functionality associated with the compiled application/communication servicing software licensed at 502 from a licensor to a licensee. When the licensed functionality of this pre-provisioned device is first activated and/or whenever it is detected as active (e.g., by the data relay service provider) at **510** (e.g., possibly with required concurrent interface to the Internet or other communication media), then suitable data can be sent to the licensor and/or licensee so as to document the need for a further licensing royalty if make part of the license agreement **502)** paid to the licensor as depicted at **512** in FIG. 5. As previously noted, this monetary payment may be required of the end user if a certain feature or suite of features is activated or, as the license may provide, may require further monetary payment to be made from the licensee (e.g., the device manufacturer) to the licensor. Fro example, the additional royalty could be triggered by the average usage of a licensed feature on a monthly basis.

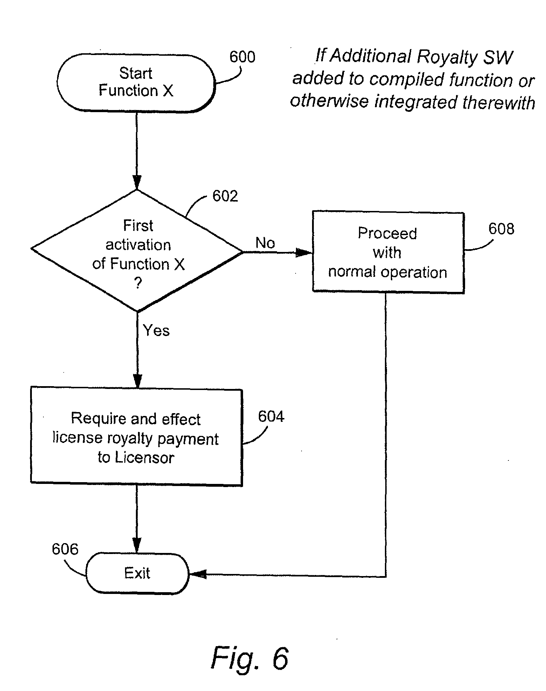

As depicted in FIG. 6, the pre-provisioned user device may optionally include suitable program logic that is entered at **600** whenever a new function X is to be started. If this is detected at **602** to be the first activation of that particular function X, then, as previously described, suitable automatic steps may be taken at **604** to require and effect a license royalty payment to the licensor at **604** before exit is taken at **606.** If this is not detected to be a first activation of function X at **602,** then exit may be taken directly at **606** or, if some additional housekeeping is necessary for that particular implementation, then such may be accomplished at **608** before exit is taken at **606.**

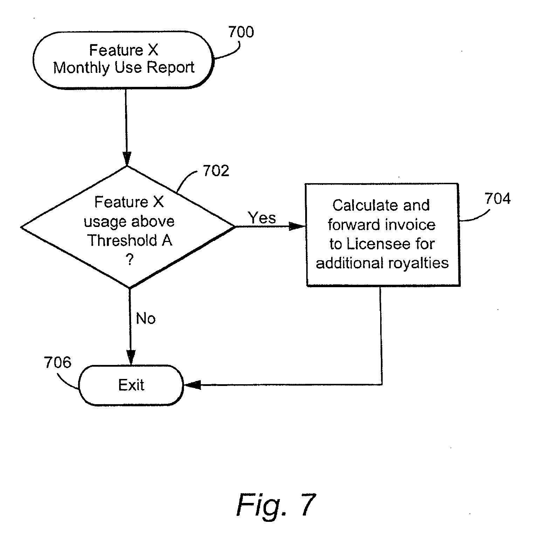

As previously noted, the data relay provider 16 may maintain licensed feature usage data. Thus, as depicted in **FIG. 7,** for a given feature X, a monthly usage report routine may be entered at **700.** If the feature usage is above a predetermined threshold A (which could be zero or otherwise depending upon the license agreement) as detected at **702,** then at **704** an appropriate invoice is calculated and sent to the licensee for an additional royalty payment. In either case, the routine is exited at **706.**

In the above description, there are references to handsets connecting to the data relay provider's enterprise server or allowing licensees to leverage the data relay provider's presence in the enterprise space. The "connect" and "built-in" handsets can also connect to the data relay provider's internet service (e.g., a data relay provider's web client) so that the programs capitalize on the overall data relay provider's value proposition (e.g., both enterprise and prosumer).

As may be appreciated from the above, the "built-in" handset may substantially change the user interface, or in some cases, it may be the entire user interface. While the "connect" handset user interface changes, if any, may be quite subtle (e.g., since it uses existing operating system and applications on the handset), the "built-in" handset user interface is typically not at all subtle. For example, "built-in" embodiments may be implemented in at least two types.

First, the "built-in" features may run in parallel with an existing operating system and application set. In this case, when the user is using the data relay provider functionality, he/she accesses the data relay provider applications but can also access native applications on the handset to do other functions. For example, when the "built-in" data relay provider functionality is enabled, a user may access the data relay provider email application to do email functions. However, the user may also use a native phone application to make telephone calls. Thus the integration of data relay provider "built-in" functions may significantly change the overall user experience/interface of the handset.

Second, the "built-in" functionality may be the only operating environment on the handset. In this type of integration, there are no other native applications. The data relay provider "built-in" functionality is the entire user experience. In this case, the user interface is nearly identical to that encountered by a handset provided directly by the data relay provider itself.

With respect to revenue sharing, the overall approach as to how data provider services are integrated into manufactured handsets need not matter. Accordingly, it should be understood that the above exemplary descriptions are not limiting but, instead, merely examples of some possibilities. the "connect" and "built-in" approaches are just two different ways of enabling a licensee's handset to enjoy one or more data relay provider functions. The revenue sharing methodology may be applied the same way to both types of licensee devices.

Some features of the above-described exemplary embodiment(s) are noted below:
- Allows vendor to license and integrate third party (e.g., data relay service provider) services into its handsets.
- Licensable compiled software (e.g., in the C language) can component enable a wireless device to access data relay provider service.
- Can implement data relay provider transport stack.
- Can enable secure, push-based access to corporate data.
- Stack can link the handset to a data relay enterprise server via data relay provider infrastructure.
- The host platform can retain its same look and feel.
   - Licensed stack can be a "behind-the-scenes" secure connection to an enterprise server.
- Can allow a handset to communicate with an enterprise server.
- Can be designed to deliver a variety of data relay provider services.
   - Email may be a first supported service, with others to follow.
- Features that can be easily included (e.g., because already part of the data relay provider infrastructure):
   - Security: Triple-DES encryption
   - Push technology
   - Efficient transport: Compression, Partial delivery
   - Reliability: Retries, acknowledgements
   - IT Policy
   - Choice of device and functionality
   - Centralized IT management and control
- Can be integrated with existing host applications.

### Typical integration requirements for licensed data relay infrastructure

- Typical System requirements:
   - 32K RAM
   - 128K non-volatile storage
- Typical OS requirements:
   - Memory management
   - file system or database
   - System timer
   - Cryptographic-grade random number generation
- Typical Radio layer requirements:
   - IP Services
   - Coverage status information
   - Roaming notification

### Typical Integration Model

- Data relay provider can license the stack as a compiled software component
- Data relay provider functionality can be exposed through a set of APIs
- Licensee may implement an integration layer to act as the interface between the host environment and the data relay provider stack
   - Integration layer can call functions implemented in the stack
      - Example: Connect to service, Send message
   - Stack can call functions implemented by the integration layer
      - Ex: Query connectivity status, "message received" alert

### Integration Overview

- To integrate data relay provider services into a wireless device, the following development typically takes place:
   - Email client modifications:
      - Push
      - Partial delivery
      - Reply and forward by reference
   - Desktop software modifications:
      - Data relay provider specific components can be integrated into existing desktop software
      - Can implement communication with an enterprise server to exchange routing info, set filter configuration, exchange crypto keys, etc.
   - Integration layer development
   - If the OS and radio layer do not provide adequate functionality, modifications may be necessary
- All data relay provider wireless services can be supported
   - Email, Wireless Calendar, IT Management, GAL Look-up, MDS, BWC
   - Plus future wireless services
- Unicode support
- Future networks: CDMA/1xRTT

### Value Proposition:Licensee

- Leverage data relay provider's established brand in the enterprise
- Leverage the data relay provider's enterprise installations worldwide
- Leverage data relay provider's worldwide carrier and channel relationship
- Recurring revenue stream

### Value Proposition: Wireless Carrier

- Diversified data relay provider handset offering to address different market segments
- Leverage existing investment in data relay provider
- Additional service and handset revenue resulting from a broader target market

The herein described licensing programs may support any wireless network standard (e.g., future networks) that the data relay provider overall supports. For example, GPRS and CDMA may be currently supported, but that may evolve in the future.

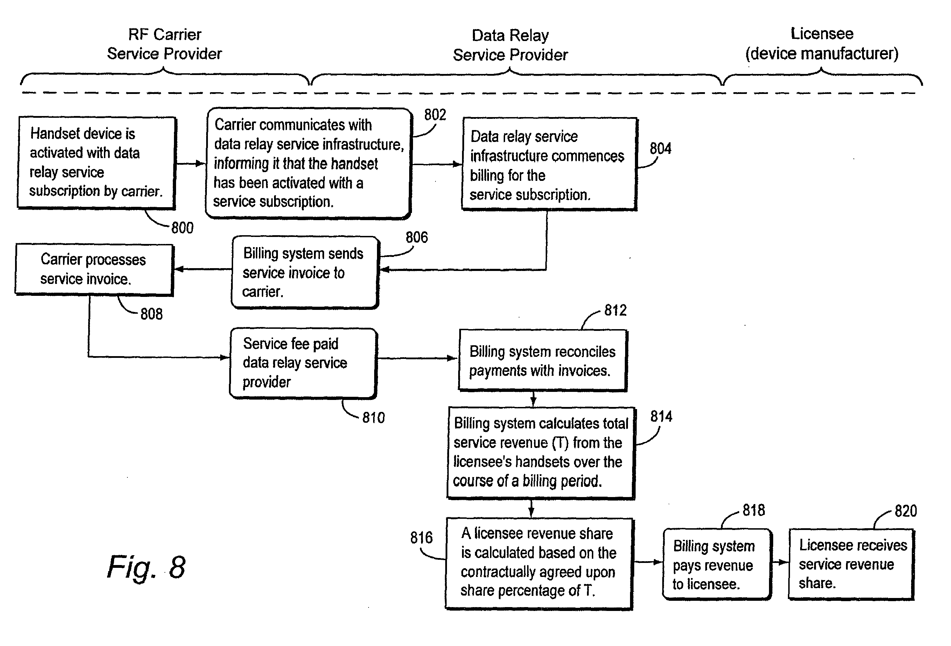

In FIG. 8 exemplary events are depicted from left to right that might typically take place respectively at and between an RF carrier service provider, a data relay service provider and a licensee (e.g., wireless communication device manufacturer). Typically, a handset newly provisioned with a licensed software feature will, if it is to be used, activate such feature with a chosen RF carrier as depicted at **800.** The RF carrier has an ongoing service subscription relationship with the data relay service provider and therefore communicates this new activation to the data relay service provider at **802.**
This permits the data relay service provider infrastructure to then commence billing for the newly activated feature at **804.** Regular invoicing of the RF carrier service provider occurs at **806** and normal invoice processing occurs at **808** with the fee being paid to the data relay service provider at **810.** The data relay service provider billing system then reconciles payments with invoices in the typical fashion at **812** permitting calculation of the total service revenue T that has been received due to use of licensee's handsets over the course of a billing period at **814.** It will be understood that there may be several RF carrier service providers providing such service fee payments for use of a given licensed device feature. At **816** the appropriate licensee's share of such revenue is calculated (based on contractual agreement) at **816** followed by payment being issued at **818** and received by the licensee (device manufacturer) at **820.** It will be understood, of course, that other methodologies for sharing revenue with the licensed device manufacturer based on detected actual usage of a licensed feature can be envisioned.

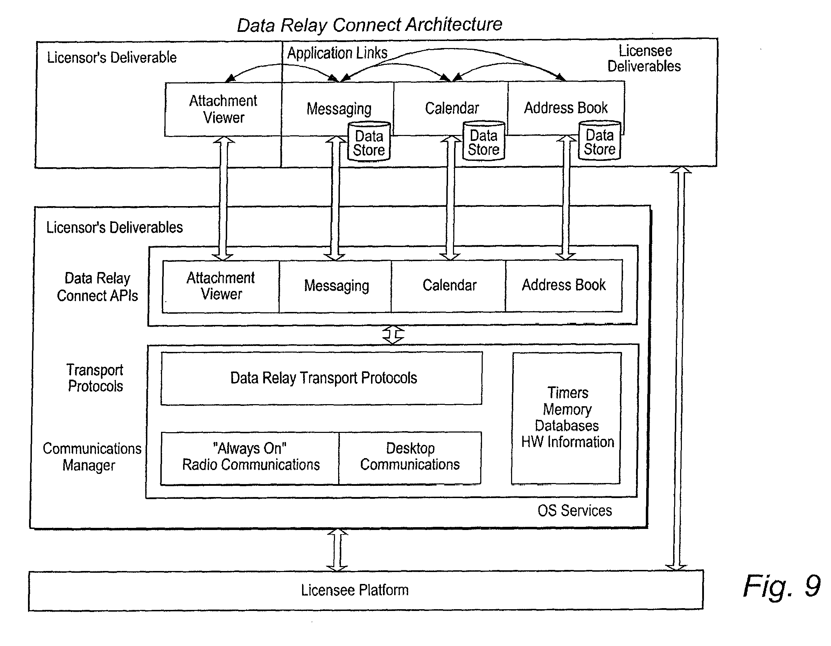

One exemplary "connect" architecture for utilizing licensed data relay provider software infrastructure is depicted at FIG. 9. Some features of this architecture are noted below:

### Data Relay Connect Architecture Package

- Transport stack
- Provides protocol level access to data relay provider's infrastructure for a customizable experience
   - Data relay connect transport stack provides protocol low level access to the data relay provider's service
- Reliability: Datagram segmentation, re-assembly, retries and acknowledgements
- Efficiency: Partial "Just in time" delivery and compression
- Security:3DES Encryption
- Push Delivery:Always On, Always Connected, True Push Experience
- Connection with data relay enterprise server and data relay infrastructure
   - Data relay provider's connect 2.0 features includes:
- Data relay enterprise and Prosumer solutions
- Support for Email, email reconciliation, attachment viewing, Calendar, IT Policy, and Address Look-up

### Data Relay Provider Connect-Roles

### Data Relay Provider

- Provide software APIs for each platform that enables access to data relay provider's network services
- Publish implementation guidelines to achieve fullest data relay provider infrastructure experience
- Support application developers/licensees during development, integration and carrier launch
- Perform device authorization testing to permit access to data relay provider's network infrastructure
- Enable licensees with data relay provider's connect branding program
- Application Enablement for Data Relay Provider Services
- Device #1 platform: Done by Device #1 mfgr
- Device #2: Done by data relay provider
- Device #3: Done by UI vendor/licensee
- Data relay provider's Connect licensee
- Hardware platform
- Operating System
- Radio Layer
- Integration of Data Relay
- Integration of applications
   (messaging, calendaring, etc.)

### Device Deployment/Availability

- Licensees can start development upon receipt of APIs
   - consult with licensees to determine device availability dates
- Licensees choose which features to expose
   - Just because feature is available in API doesn't guarantee that licensee will implement it in its software
   - consult with licensees to determine feature availability for its devices

### Example of Possible User Experience with Device

- The user can experience the conventional Device GUI first data relay provider augmentation of some or all of the features available via the normal Device GUI.
   - Users can still use Outlook inbox, Calendar, and Contact applications as normal.
- Licensed stack receives messages from the data relay provider enterprise server and injects them into the inbox.
- License stack monitors the Outbox for sent messages and passes them to the data relay provider's enterprise server
- Users never interact directly with the licensed stack.

### Exemplary IT Policies For "connect" Architecture

### IT Administration Tasks (licensee dependent)

- Set peer-to-peer key
- Set owner info
- Reset password and lock device
- Kill device

### IT Policy Support (licensee dependent)

- Enable/disable phone
- Enable/disable browser
- Enable/disable PIN messaging
- Enable/disable SMS
- Enable/disable BCC
- Enable/disable wireless email reconciliation
- Allow/disallow user disable password
- Allow/disallow 3^{rd} party apps
- Password required
- Set min password length
- Inactivity timeout changeable
- Set max inactivity timeout
- Password pattern checking?
- Set max password age
- Set max password attempts
- Suppress password echo
- Password history
- Disallow other email services

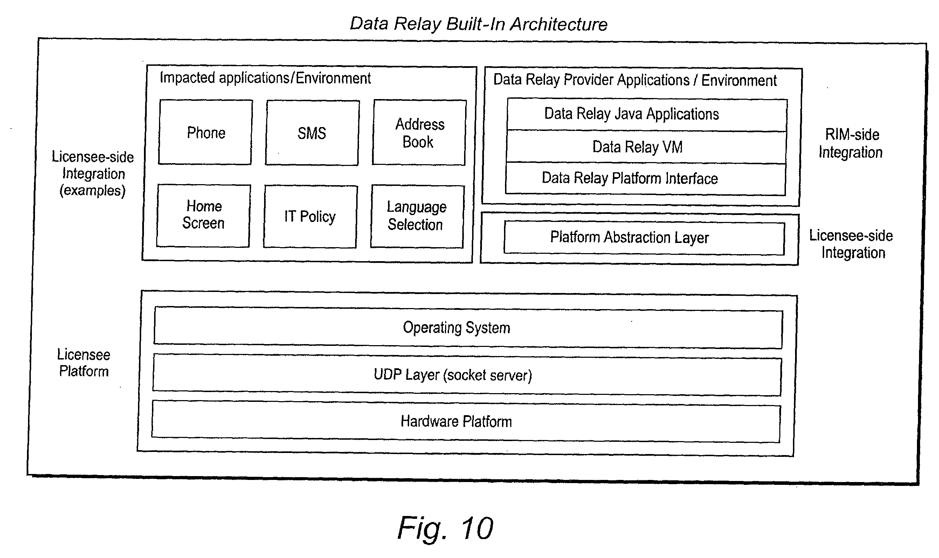

An exemplary "built-in" architecture for utilizing licensed data relay provider software infrastructure is depicted at FIG. 10. Some features of this architecture are noted below:

### Data Relay Built-In Architecture Package

- Full-featured application suite
- Java Virtual machine delivers native data relay provider applications for complete data relay provider experience
   - Data relay provider Built-In package provides the data relay provider applications and secure environment to licensees via existing data relay provider java virtual machine

Typical data relay provider's Built-In applications/services available:
Email, Contacts, Notes, Calendar, Options, Tasks, Browser, IT Policies, and Lock/Password

The data relay provider Built-In package can employ the latest data relay provider Java virtual machine employed on its own handhelds, including enhanced features such as full over the air provisioning; graphics viewers, etc. Wireless carriers can leverage existing investments in data relay provider support, provisioning and sales training due to the similarity between data relay provider's own handhelds and those of the data relay provider's licensed client.

### Typical Data Relay Built-In Rules

### Data relay provider

- Provide data relay applications and data relay VM
- Work with licensee to integrate data relay provider/licensee applications
- Work with licensee to integrate data relay VM with licensee OS
- Perform device authorization testing to permit access to data relay provider network infrastructure
- Enable licensees with data relay provider Built-In branding program

### Licensee

- Hardware platform
- Operating System
- Radio Layer
- Work with data relay provider to integrate
- Licensee/data relay provider applications
- Work with data relay provider to integrate data relay provider VM with licensee OS

### Example of User Experience with data relay provider Built-In Package:

- The user experience may be equivalent to data relay provider's applications found on its own handhelds
   - User interface can be themed to adapt to native look and feel of device.
   - Users may use standard data relay provider's email, calendar and browser.
- Identical user interface flow to data relay provider's handhelds providing easy learning curve for existing data relay provider users.

### Examples of Built-In Additional Features

- Wireless data relay provider synchronization
- Wireless email settings
- Automatic wireless backup
- Wireless encryption key regeneration
- AES transport encryption
- Sent item synchronization
- Use data relay provider router and handheld manager
- Cradle-less provisioning
- Handheld agent reporting
- 3^{rd}-party application control
- Attachment viewing enhancements

As those in the art will appreciate, many variations and modifications may be made in the exemplary embodiments described above while yet retaining many of the novel features and advantages of this invention. Accordingly, all such variations and modifications are intended to be included within the scope of the appended claims.

## Claims

1. A method for deploying and licensing wireless communication device computer software infrastructure, said method comprising:
licensing at least one compiled feature-provisioning computer program with a disclosed application program interface (API) to a licensee that is a manufacturer/distributor/seller of wireless communication devices;
using the disclosed API to integrate such licensed program into wireless communication devices as offered to end users;
collecting licensor revenue based on use of the licensed program by an end user of the device; and
sharing collected licensor revenue with a licensee of said program..

2. A method as in claim 1 wherein said licensed feature-provisioning computer program utilizes a data relay service provider and said licensor revenue is determined based on usage of a feature corresponding to the licensed program as shown by utilization of the data relay service provider.

3. A method as in claim 1 wherein said at least one licensed feature-provisioning computer program permits connection to a data relay service provider without substantially altering the graphical user interface (GUI) otherwise used by said manufacturer/distributor/seller.

4. A method as in claim 3 wherein said licensed feature provisioning computer program is interfaced with application and utility software otherwise used by the manufacturer/distributor/seller with an integration layer of software that utilizes said API to access and utilize the licensed feature-provisioning computer program.

5. A method as in claim 1 wherein said at least one licensed feature-provisioning computer program permits connection to a data relay service provider using substantially the same built-in graphical user interface (GUI) utilized by the data relay service provider in its own marketed wireless communication devices.

6. A method as in claim 1 wherein said wireless communication devices are configured to provide notification of initial activation of the licensed program thereby triggering said licensor revenue.

7. A system for deploying and licensing wireless communication device computer software infrastructure, said system comprising:
means for licensing at least one compiled feature-provisioning computer program with a disclosed application program interface (API) to a licensee that is a manufacturer/distributor/seller of wireless communication devices;
integration software using the disclosed API to integrate such licensed program into wireless communication devices as offered to end user;
means for collecting licensor revenue based on use of the licensed program by an end user of the device; and
means for sharing collected licensor revenue with a licensee of said program.

8. A system as in claim 7 wherein said licensed feature-provisioning computer program utilizes a data relay service provider and said means for collecting licensor revenue includes means for determining licensor revenue based on usage of a feature corresponding to the licensed program as shown by utilization of the data relay service provider.

9. A system as in claim 7 wherein said at least one licensed feature-provisioning computer program is configured to permit connection to a data relay service provider without substantially altering the graphical user interface (GUI) otherwise used by said manufacturer/distributor/seller.

10. A system as in claim 9 wherein said licensed feature provisioning computer program is interfaced with application and utility software otherwise used by the manufacturer/distributor/seller with an integration lay of software that utilizes said API to access and utilize the licensed feature-provisioning computer program.

11. A system as in claim 7 wherein said at least one licensed feature-provisioning computer program is configured to permit connection to a data relay service provider using substantially the same built-in graphical user interface (GUI) utilized by the data relay service provider in its own marketed wireless communication devices.

12. A system as in claim 7 wherein said wireless communication devices are configured to provide a predetermined notification of initial activation of the licensed program thereby triggering licensor revenue.

13. A computer program storage medium on which is stored at least one computer program which, when executed, facilitates a method for deploying and licensing wireless communication device computer software infrastructure, said method comprising:
licensing at least one compiled feature-provisioning computer program with a disclosed application program interface (API) to a licensee that is a manufacturer/distributor/seller of wireless communication devices;
using the disclosed API to integrate such licensed program wireless communication devices as offered to end users;
collecting licensor revenue based on use of the licensed program by an end user of the device; and
sharing collected licensor revenue with a licensee of said program.

14. A computer program storage medium as in claim 13 wherein said licensed feature-provisioning computer program utilizes a data relay service provider and said licensor revenue is determined based on usage of a feature corresponding to the licensed program as shown by utilization of the data relay service provider.

15. A computer program storage medium as in claim 13 wherein said at least one licensed feature-provisioning computer program permits connection to a data relay service provider without substantially altering the graphical user interface (GUI) otherwise used by said manufacturer/distributor/seller.

16. A computer program storage medium as in claim 15 wherein said licensed feature provisioning computer program is interfaced with application and utility software otherwise used by the manufacturer/distributor/seller with an integration layer of software that utilizes said API to access and utilize the licensed feature-provisioning computer program.

17. A computer program storage medium as in claim 13 wherein said at least one licensed feature-provisioning computer program permits connection to a data relay service provider using substantially the same built-in graphical user interface (GUI) utilized by the data relay service provider in its own marketed wireless communication devices.

18. A computer program storage medium as in claim 13 wherein said wireless communication devices are configured to provide notification of initial activation of the licensed program thereby triggering said licensor revenue.
